# EUROPEAN PATENT APPLICATION

(11) **EP 4 379 547 A1**
(43) Date of publication of application: **05.06.2024**
(21) Application number: 23210832.4
(22) Date of filing: 20.11.2023
(51) Int. Cl.: G06F 9/48

(54) **SYSTEMS AND METHODS FOR PARAMETER MANAGEMENT**

(30) Priority: 02.12.2022 US 202263429726 P; 16.02.2023 US 202318170272
(71) Applicant: Samsung Electronics Co., Ltd., Suwon-si, Gyeonggi-do 16677 (KR)
(72) Inventor: HONG, Ilgu, San Jose, CA 95134 (US); CHOI, Changho, San Jose, CA 95134 (US)
(74) Representative: Kuhnen & Wacker Patent- und Rechtsanwaltsbüro PartG mbB

(57) **Abstract**

Systems and methods for parameter management. In some embodiments, a method includes: receiving, by a computational storage device, a program, and a first parameter type descriptor; receiving, by the computational storage device, a program execute instruction including a second parameter type descriptor; determining, by the computational storage device, that the second parameter type descriptor matches the first parameter type descriptor; and executing, by the computational storage device, the program.

## Description

### FIELD

One or more aspects of embodiments according to the present disclosure relate to computational storage devices, and more particularly to systems and methods for parameter management in computational storage devices.

### BACKGROUND

Computational storage devices may be employed to provide near-storage computation in a computing system, reducing the load on computational resources in host systems connected to computational storage devices, and mitigating bandwidth bottlenecks that may exist between persistent storage systems and host systems.

It is with respect to this general technical environment that aspects of the present disclosure are related.

### SUMMARY

According to an embodiment of the present disclosure, there is provided a method, including: receiving, by a computational storage device, a program, and a first parameter type descriptor; receiving, by the computational storage device, a program execute instruction including a second parameter type descriptor; determining, by the computational storage device, that the second parameter type descriptor matches the first parameter type descriptor; and executing, by the computational storage device, the program.

In some embodiments, the first parameter type descriptor includes a first parameter type identifier and a second parameter type identifier.

In some embodiments, the method further includes: determining, based on stored data associated with the first parameter type identifier, a first parameter width of a first parameter associated with the first parameter type identifier; and interpreting a first received parameter based on the parameter width of the first parameter.

In some embodiments: the first parameter type identifier has a first width and the second parameter type identifier has a second width, equal to the first width; and the first parameter type width is greater than 2 bits and less than 8 bits.

In some embodiments, the first parameter type descriptor includes a termination symbol.

In some embodiments, the first parameter type identifier identifies a device local memory type.

In some embodiments, the program execute instruction further includes: a program slot identifier; a first parameter, corresponding to the first parameter type identifier; and a second parameter corresponding second parameter type identifier.

In some embodiments, the method further includes: determining, by the computational storage device, that the first parameter is a parameter of type device local memory; and determining that a memory range identifier of the first parameter falls within a memory range assigned to a program slot identified by the program slot identifier, wherein the executing of the program includes executing the program based on: the determining that the first parameter is a parameter of type device local memory; and the determining that a memory range identifier of the first parameter falls within a memory range assigned to a program slot identified by the program slot identifier.

In some embodiments, the method further includes: receiving a discovery command; and transmitting a response to the discovery command, the response including the first parameter type descriptor.

In some embodiments, the response further includes a parameter type information table.

According to an embodiment of the present disclosure, there is provided a computational storage device, including: a processing circuit; and memory, operatively connected to the processing circuit and storing instructions that, when executed by the processing circuit, cause the computational storage device to perform a method, the method including: receiving a program, and a first parameter type descriptor; receiving a program execute instruction including a second parameter type descriptor; determining that the second parameter type descriptor matches the first parameter type descriptor; and executing the program.

In some embodiments, the first parameter type descriptor includes a first parameter type identifier and a second parameter type identifier.

In some embodiments, the method further includes: determining, based on stored data associated with the first parameter type identifier, a parameter width of a first parameter associated with the first parameter type identifier; and interpreting a first received parameter based on the parameter width of the first parameter.

In some embodiments: the first parameter type identifier has a first width and the second parameter type identifier has a second width, equal to the first width; and the first parameter type width is greater than 2 bits and less than 8 bits.

In some embodiments, the first parameter type descriptor includes a termination symbol.

In some embodiments, the first parameter type identifier identifies a device local memory type.

In some embodiments, the program execute instruction further includes: a program slot identifier; a first parameter, corresponding to the first parameter type identifier; and a second parameter corresponding second parameter type identifier.

In some embodiments, the method further includes: determining, by the computational storage device, that the first parameter is a parameter of type device local memory; and determining that a memory range identifier of the first parameter falls within a memory range assigned to a program slot identified by the program slot identifier, wherein the executing of the program includes executing the program based on: the determining that the first parameter is a parameter of type device local memory; and the determining that a memory range identifier of the first parameter falls within a memory range assigned to a program slot identified by the program slot identifier.

In some embodiments, the method further includes: receiving a discovery command; and transmitting a response to the discovery command, the response including the first parameter type descriptor.

According to an embodiment of the present disclosure, there is provided a computational storage device, including: a processing circuit; and memory, operatively connected to the processing circuit and storing instructions that, when executed by the processing circuit, cause the computational storage device to perform a method, the method including: receiving a program, and a first parameter type descriptor; receiving a program execute instruction including a second parameter type descriptor; determining that the second parameter type descriptor matches the first parameter type descriptor; and executing the program.

### BRIEF DESCRIPTION OF THE DRAWINGS

These and other features and advantages of the present disclosure will be appreciated and understood with reference to the specification, claims, and appended drawings wherein:
FIG. 1 is a block diagram of a portion of a computing system, according to an embodiment of the present disclosure;
FIG. 2A is a table showing fields of a parameter type information table, according to an embodiment of the present disclosure;
FIG. 2B is a table showing fields of a parameter type descriptor, according to an embodiment of the present disclosure;
FIG. 2C is a table showing fields of a table of constants, according to an embodiment of the present disclosure;
FIG. 3A is a pseudocode listing, according to an embodiment of the present disclosure;
FIG. 3B is a pseudocode listing, according to an embodiment of the present disclosure;
FIG. 4 is a flow chart of a method, according to an embodiment of the present disclosure.

### DETAILED DESCRIPTION

The detailed description set forth below in connection with the appended drawings is intended as a description of exemplary embodiments of systems and methods for parameter management provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

As mentioned above, a computational storage device may be employed to provide near-storage computation in a computing system, reducing the load on computational resources in a host system, and mitigating bandwidth bottlenecks that may exist between persistent storage and the host. To provide such computational functionality, the computational storage device may download, or "register" an executable program (in response to a download program command issued by the host (e.g., by a user). The computational storage device may store the downloaded executable program in a respective program slot in the computational storage device. The host (e.g., the user) may then execute the downloaded program by sending, to the computational storage device, an execute command, which may include one or more parameters. The computational storage device may also store pre-programmed "fixed" executable programs, (which may, e.g., be stored in the computational storage device at the time of manufacture).

The separation of the program registration and execution procedure in architectures, such as that of the Storage Networking Industry Association (SNIA) and that of the nonvolatile memory express (NVMe) standard, may reduce versatility and prevent the computational storage device from interpreting the program parameters. This may make the computational storage device needlessly vulnerable to erroneous code or to attack, which may use malicious parameter values as an attack vector. For example, such an attack may cause a downloaded program to read from, and write data to, invalid memory ranges.

In some embodiments, therefore, the host may communicate information about the parameters to the computational storage device. For example, the host may send the computational storage device a data structure referred to as a parameter type descriptor, which specifies the type of each parameter, and, based on a table of parameter type specifications (which may be referred to as a parameter type information table), both the host and the computational storage device may be able to infer which respective bytes, within a parameter list block transmitted to the computational storage device as part of an execute instruction, correspond to each of the parameters used by the program. For certain parameter types, e.g., pointers to memory or to memory ranges, the computational storage device may also validate the parameter value, e.g., verifying that any such pointer points to an address or address range that is within the range of addresses allocated to the slot storing the program.

The parameter type descriptor may be sent to the computational storage device both at the time of program registration and at the time of execution. At the time of execution, the computational storage device may check, before beginning execution, whether the parameter type descriptor received with an execute command for a program matches the parameter type descriptor received with the program, when the download program command, for downloading the program, was received (or, for a fixed program, whether the parameter type descriptor received with an execute command matches the parameter type descriptor stored along with the program). If the parameter type descriptors do not match, the computational storage device may return an error and not execute the program.

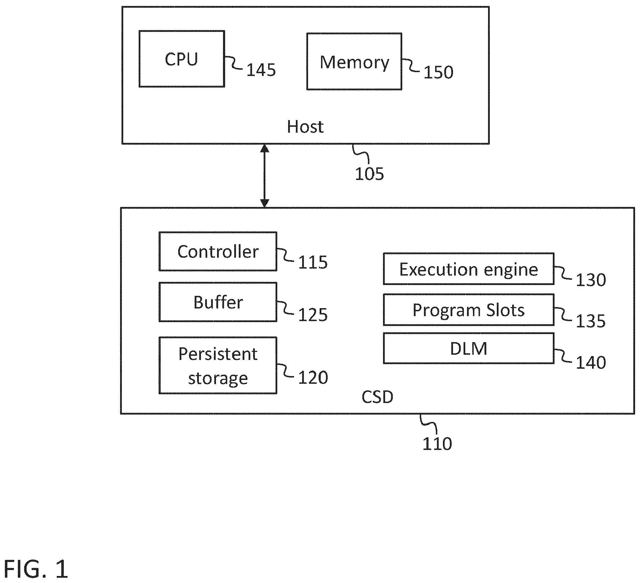

FIG. 1 is a block diagram of a portion of a computing system, in some embodiments. A host 105 includes (or, as shown, is connected to) a computational storage device 110 (which may be a persistent storage device including computational storage resources). For example, the computational storage device 110 may include a controller 115, persistent storage 120, and a buffer 125, and the computational storage resources may include one or more execution engines 130, program slots 135, and a device local memory (DLM) 140. The host may include a central processing unit (CPU) 145 and a host memory 150.

In operation, the computational storage resources may be used in a process involving two operations, a first operation involving downloading (or receiving, or "registering") a program and storing it in a slot of the program slots 135, and a second operation involving loading of the program from the program slots 135 into the execution engine 130 and execution of the program by the execution engine 130. The first operation may be performed in response to receiving, from the host 105, a command referred to as a "download program" command. The second operation may be performed in response to receiving, from the host 105, a command referred to as an "execute" command, which may include a set of parameter values used as input by the program. The parameter values may be raw binary values, concatenated in a block of data that may be referred to as a parameter list block.

In some embodiments, a parameter type descriptor (PTD) is a list of parameter type identifiers (or simply "type identifiers") for the parameters used as input by the program. The parameter type descriptor for a program may be supplied to the computational storage device 110 with the download program command that stores the program in the computational storage device 110. The computational storage device 110 may store the parameter type descriptor in a program slot information (PS_INFO) table of the computational storage device 110. Upon receipt of an execute command, which may also include a parameter type descriptor, the computational storage device 110 may compare the parameter type descriptor received with the execute command to the parameter type descriptor received with the download program command; if the parameter type descriptors do not match, the computational storage device 110 may return an error and it may not proceed with execution of the program. If the parameter type descriptors match, the computational storage device 110 may proceed to execute the program.

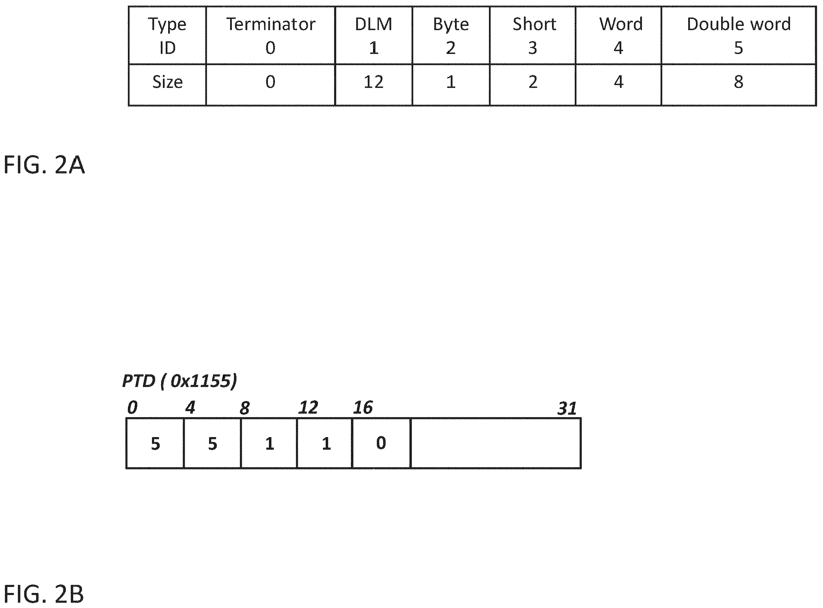

Each type identifier of the parameter type descriptor may be an integer and may correspond to a respective type. The type correspondence may be specified by a parameter type information table (PTIT), an example of which is shown in FIG. 2A. As illustrated in FIG. 2A, the parameter type information table may indicate, for example, that type identifier 1 corresponds to data type DLM (device local memory) (for which the type identifier may identify a device local memory type), type identifier 2 corresponds to data type byte, type identifier 3 corresponds to data type short, type identifier 4 corresponds to data type word, and type identifier 5 corresponds to data type double word. Type identifier 0 may be used as a delimiter (or "terminator") signaling the end of the listing of type identifiers within the parameter type descriptor. When the entire parameter type descriptor is used (e.g., when there are as many parameters as there are fields in the parameter type descriptor) the terminator may be absent.

FIG. 2B shows an example of a parameter type descriptor based on the parameter type information table of FIG. 2A. The parameter type descriptor, in this example, has a width of 32 bits, consisting of eight 4-bit-wide fields (the width of each of these fields (e.g., 4 bits in this example) may be referred to as the parameter type width). In some embodiments, the parameter type width is greater than or less than 4 bits, e.g., it may be 3 bits, 5 bits, 6 bits, 7 bits, 8 bits, 12 bits, or 16 bits. In some embodiments, the parameter type descriptor includes more or fewer than eight fields (each field including a parameter type); for example, it may include 4 fields, 5 fields, 6 fields, 7 fields, 12 fields, or 16 fields. The bits are shown, in FIG. 2B, from least significant on the left to most significant on the right. The parameter type descriptor of FIG. 2B has a value of 0x1155, signifying that the first parameter type is double word, the second parameter type is double word, the third parameter type is device local memory, and the fourth parameter type is device local memory. The value of the fifth 4-bit-wide field is zero, a terminator signifying that the parameter type descriptor contains four type identifiers. The remainder of the parameter type descriptor (the bits that are more significant than bit 19) may be ignored by the computational storage device 110. The size of the parameter list block may be inferred from the parameter type descriptor of FIG. 2B and from the parameter type information table of FIG. 2A, to be 40 bytes (two 8-byte parameters of type double word, and two 12-byte parameters of type device local memory). When the computational storage device 110 receives a program execute instruction, it may receive, with the program execute instruction, a parameter list block. The computational storage device 110 may then determine, based on stored data associated with a first parameter type identifier (e.g., based on the parameter type information table), a parameter width of a first parameter associated with the first parameter type identifier (e.g., it may determine that the parameter width of the first parameter in the parameter list block is 8 bytes); and the computational storage device 110 may interpret the first received parameter (e.g., the first parameter of type double word) based on the parameter width (8 bytes) of the first parameter.

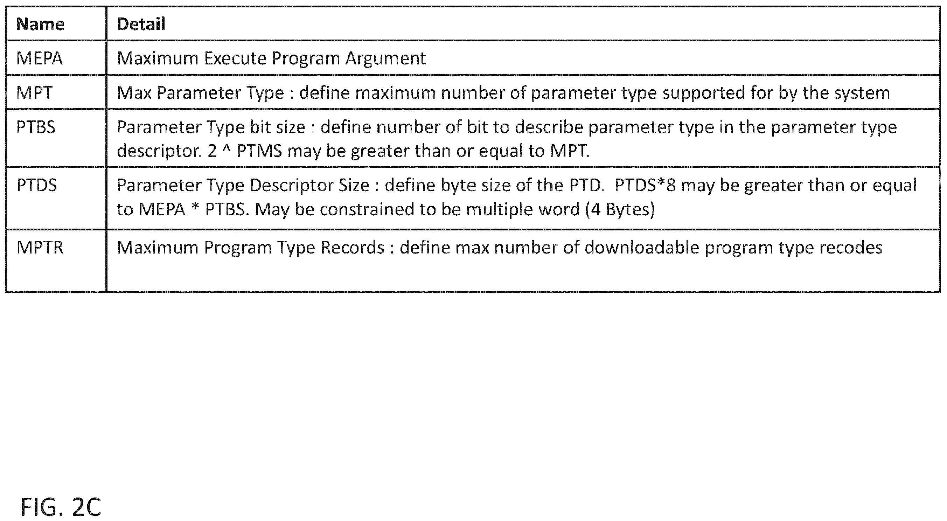

FIG. 2C shows a table of constants, in some embodiments. In the example of FIG. 2C, the table includes six constants; in some embodiments more or different constants may be employed. A maximum execute program argument (MEPA) constant specifies the maximum number of arguments (e.g., parameters) that may be passed in to the computational storage device 110 along with an execute command. A max parameter type constant (MPT) may define the maximum number of parameter types supported by the system. A parameter type bit size (PTBS) may define the number of bits available for each type identifier (e.g., 4 bits, in the example of FIGs. 2A and 2B). The max parameter type constant (MPT) may be less than 2^PTMS. A parameter type descriptor size (PTDS) may define the size, in bytes, of the parameter type descriptor. This size may be sufficiently large to accommodate a type identifier for each of the parameters, if the number of parameters equals the maximum execute program argument constant; for example, PTDS*8 may be greater than or equal to MEPA * PTBS. In some embodiments, the MPTR is constrained to be a multiple of 4 bytes. A maximum program type records (MPTR) may define the maximum number of downloadable program type records.

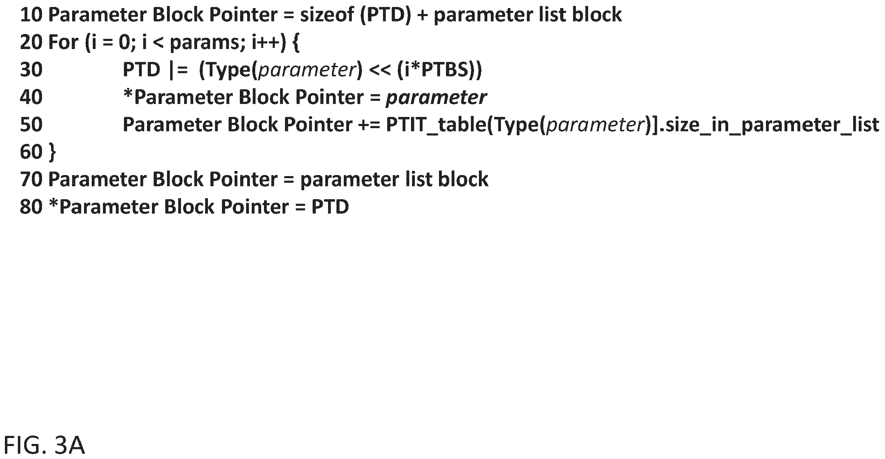

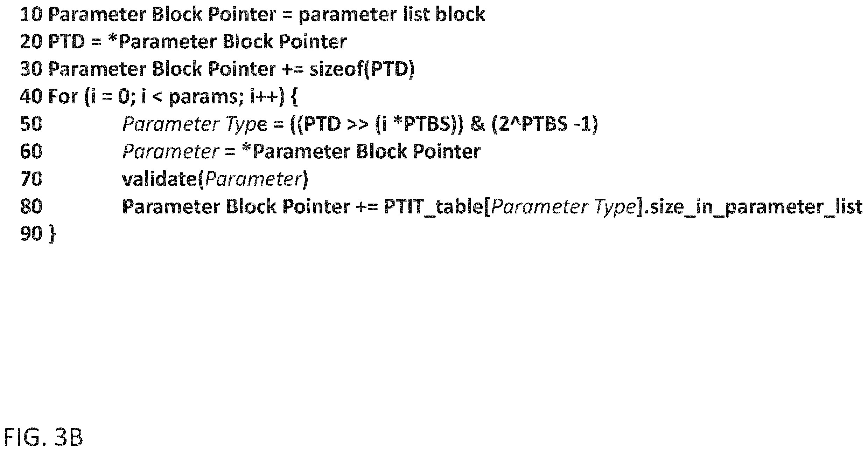

FIG. 3A shows pseudocode for a method for constructing a parameter list block and a corresponding parameter type descriptor. In each iteration of the loop that extends from line 20 to line 60, a type identifier is added (at line 30) to the parameter type descriptor, and the corresponding parameter value is added (in lines 40 and 50) to the parameter list block (stored at a location to which the variable "Parameter Block Pointer" points). FIG. 3B shows pseudocode for a method for extracting type identifiers from a parameter type descriptor and for extracting the corresponding parameters from a parameter list block. In each iteration of the loop that extends from line 40 to line 90, a type identifier is extracted (at line 50) from the parameter type descriptor, and the corresponding parameter value is extracted (in line 60) from the parameter list block. The parameter is validated (e.g., analyzed to assess whether its value is valid, as discussed in further detail below for parameters of type device local memory) at line 70.

As mentioned above, if a parameter of the set of parameters is of type device local memory, then the computational storage device 110 may validate its value, e.g., the computational storage device 110 may assess whether the value is valid. Each device local memory parameter may be a 12-byte value, with 4 bytes specifying a memory range identifier (MR ID), four bytes specifying an offset (within the identified memory range) and 4 bytes specifying the size. Each memory range may also have an offset, specifying where (in memory, relative to a set starting address) the memory range begins, and each memory range may also have a size.

The computational storage device 110 may calculate a global offset for the device local memory parameter by adding the offset of the device local memory parameter to the offset of the memory range. As a first validation check, the computational storage device 110 may check whether the sum of the offset of the device local memory parameter and the size of the device local memory parameter is less than or equal to the size of the memory range. If it is not, then some data of the device local memory parameter would, if this parameter were stored in the memory range, extend beyond the upper boundary of the memory range. The computational storage device 110 may therefore, in this circumstance, return an error and terminate the execute command. Similarly, if the memory range identifier identifies a memory range that is not allocated to the slot in which the program to be executed is stored, the computational storage device 110 may return an error and terminate the execute command.

Once the value of the device local memory parameter has been validated, the computational storage device 110 may convert, using a mmap() function (which may be a function that creates a new mapping in the virtual address space of the calling process), the global offset and the size of the device local memory parameter to a DLM index, which may include a virtual address and a size, and which may operate as an abstraction for the execution environment. The execution engine 130 may then use the DLM index to access memory using the GetDeviceMemoryRange() function (which may be a function that gets the mmap() address for the memory range). For example, using the mmap() function, the device may attach memory space (of memory range) to the program address space, and replace memory range information (offset and size) with the DLM index in the parameter list block. The program may extract attached memory information (address and size) by calling the GetDeviceMemoryRange() function with the DLM index which was created by the device.

The computational storage device 110 may provide a discovery function, (e.g., via a suitable SNIA or NVMe command, allowing the host to request, and receive from the computational storage device 110, the parameter type information table, the program slot information table, and the table of constants. This discovery function may also make it possible for the host (e.g., a user) to determine what the parameter types are for a fixed program.

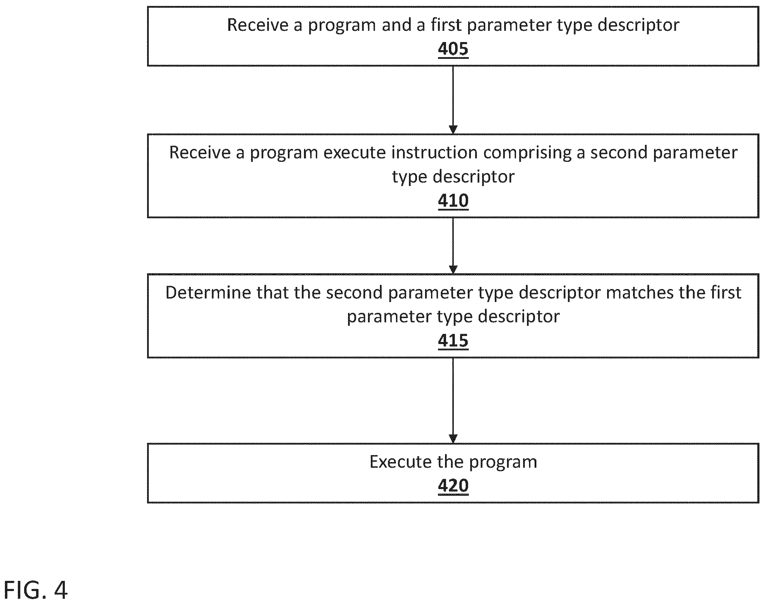

In some embodiments, the size of a parameter type may be different when it is used for the parameter list block of an execute program command and when it is used for parameter block for the execution of download program. In such an embodiment, the parameter may be described by a modified PTIT (program type information table). For example, the DLM type occupies 12 bytes in a parameter list but it may be converted to a 4-byte DLM identifier in a parameter block for the execution of a downloaded program. FIG. 4 is a flow chart of a method, in some embodiments. The method includes receiving, at 405, by a computational storage device, a program, and a first parameter type descriptor; receiving, at 410, by the computational storage device, a program execute instruction comprising a second parameter type descriptor; determining, at 415, by the computational storage device, that the second parameter type descriptor matches the first parameter type descriptor; and executing, at 420, by the computational storage device, the program.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Some embodiments may include features of the following numbered statements.
1. A method, comprising:
   receiving, by a computational storage device, a program, and a first parameter type descriptor;
   receiving, by the computational storage device, a program execute instruction comprising a second parameter type descriptor;
   determining, by the computational storage device, that the second parameter type descriptor matches the first parameter type descriptor; and
   executing, by the computational storage device, the program.
2. The method of statement 1, wherein the first parameter type descriptor comprises a first parameter type identifier and a second parameter type identifier.
3. The method of statement 2, further comprising:
   determining, based on stored data associated with the first parameter type identifier, a first parameter width of a first parameter associated with the first parameter type identifier; and
   interpreting a first received parameter based on the parameter width of the first parameter.
4. The method of statement 2 or statement 3, wherein:
   the first parameter type identifier has a first width and the second parameter type identifier has a second width, equal to the first width; and
   the first parameter type width is greater than 2 bits and less than 8 bits.
5. The method of any one of statements 2 to 4, wherein the first parameter type descriptor comprises a termination symbol.
6. The method of any one of statements 2 to 5, wherein the first parameter type identifier identifies a device local memory type.
7. The method of statement 6, wherein the program execute instruction further comprises:
   a program slot identifier;
   a first parameter, corresponding to the first parameter type identifier; and
   a second parameter corresponding second parameter type identifier.
8. The method of statement 7, further comprising:
   determining, by the computational storage device, that the first parameter is a parameter of type device local memory; and
   determining that a memory range identifier of the first parameter falls within a memory range assigned to a program slot identified by the program slot identifier,
   wherein the executing of the program comprises executing the program based on:
      the determining that the first parameter is a parameter of type device local memory; and
      the determining that a memory range identifier of the first parameter falls within a memory range assigned to a program slot identified by the program slot identifier.
9. The method of any one of the preceding statements, further comprising:
   receiving a discovery command; and
   transmitting a response to the discovery command, the response comprising the first parameter type descriptor.
10. The method of statement 9, wherein the response further comprises a parameter type information table.
11. A computational storage device, comprising:
   a processing circuit; and
   memory, operatively connected to the processing circuit and storing instructions that, when executed by the processing circuit, cause the computational storage device to perform a method, the method comprising:
      receiving a program, and a first parameter type descriptor;
      receiving a program execute instruction comprising a second parameter type descriptor;
      determining that the second parameter type descriptor matches the first parameter type descriptor; and
      executing the program.
12. The computational storage device of statement 11, wherein the first parameter type descriptor comprises a first parameter type identifier and a second parameter type identifier.
13. The computational storage device of statement 12, wherein the method further comprises:
   determining, based on stored data associated with the first parameter type identifier, a parameter width of a first parameter associated with the first parameter type identifier; and
   interpreting a first received parameter based on the parameter width of the first parameter.
14. The computational storage device of statement 12 or statement 13, wherein:
   the first parameter type identifier has a first width and the second parameter type identifier has a second width, equal to the first width; and
   the first parameter type width is greater than 2 bits and less than 8 bits.
15. The computational storage device of any one of statements 12 to 14, wherein the first parameter type descriptor comprises a termination symbol.
16. The computational storage device of any one of statements 12 to 15, wherein the first parameter type identifier identifies a device local memory type.
17. The computational storage device of statement 16, wherein the program execute instruction further comprises:
   a program slot identifier;
   a first parameter, corresponding to the first parameter type identifier; and
   a second parameter corresponding second parameter type identifier.
18. The computational storage device of statement 17, wherein the method further comprises:
   determining, by the computational storage device, that the first parameter is a parameter of type device local memory; and
   determining that a memory range identifier of the first parameter falls within a memory range assigned to a program slot identified by the program slot identifier,
   wherein the executing of the program comprises executing the program based on:
      the determining that the first parameter is a parameter of type device local memory; and
      the determining that a memory range identifier of the first parameter falls within a memory range assigned to a program slot identified by the program slot identifier.
19. The computational storage device of any one of statements 11 to 18,
   wherein the method further comprises:
   receiving a discovery command; and
   transmitting a response to the discovery command, the response comprising the first parameter type descriptor.
20. A computational storage device, comprising:
   a processing circuit; and
   memory, operatively connected to the processing circuit and storing instructions that, when executed by the processing circuit, cause the computational storage device to perform a method, the method comprising:
      receiving a program, and a first parameter type descriptor;
      receiving a program execute instruction comprising a second parameter type descriptor;
      determining that the second parameter type descriptor matches the first parameter type descriptor; and
      executing the program.

Although exemplary embodiments of systems and methods for parameter management have been specifically described and illustrated herein, many modifications and variations will be apparent to those skilled in the art. Accordingly, it is to be understood that systems and methods for parameter management constructed according to principles of this disclosure may be embodied other than as specifically described herein. The invention is also defined in the following claims, and equivalents thereof.

## Claims

1. A method, comprising:
receiving, by a computational storage device, a program, and a first parameter type descriptor;
receiving, by the computational storage device, a program execute instruction comprising a second parameter type descriptor;
determining, by the computational storage device, that the second parameter type descriptor matches the first parameter type descriptor; and
executing, by the computational storage device, the program.

2. The method of claim 1, wherein the first parameter type descriptor comprises a first parameter type identifier and a second parameter type identifier.

3. The method of claim 2, further comprising:
determining, based on stored data associated with the first parameter type identifier, a first parameter width of a first parameter associated with the first parameter type identifier; and
interpreting a first received parameter based on the parameter width of the first parameter.

4. The method of claim 2 or 3, wherein:
the first parameter type identifier has a first width and the second parameter type identifier has a second width, equal to the first width; and
the first parameter type width is greater than 2 bits and less than 8 bits.

5. The method of any one of claims 2 to 4, wherein the first parameter type descriptor comprises a termination symbol.

6. The method of any one of claims 2 to 5, wherein the first parameter type identifier identifies a device local memory type.

7. The method of claim 6, wherein the program execute instruction further comprises:
a program slot identifier;
a first parameter, corresponding to the first parameter type identifier; and
a second parameter corresponding second parameter type identifier.

8. The method of claim 7, further comprising:
determining, by the computational storage device, that the first parameter is a parameter of type device local memory; and
determining that a memory range identifier of the first parameter falls within a memory range assigned to a program slot identified by the program slot identifier,
wherein the executing of the program comprises executing the program based on:
the determining that the first parameter is a parameter of type device local memory; and
the determining that a memory range identifier of the first parameter falls within a memory range assigned to a program slot identified by the program slot identifier.

9. The method of an one of claims 1 to 8, further comprising:
receiving a discovery command; and
transmitting a response to the discovery command, the response comprising the first parameter type descriptor.

10. The method of claim 9, wherein the response further comprises a parameter type information table.

11. A computational storage device, comprising:
a processing circuit; and
memory, operatively connected to the processing circuit and storing instructions that, when executed by the processing circuit, cause the computational storage device to perform the method according to any one of claims 1 to 10.
